# EUROPÄISCHE PATENTSCHRIFT

(11) **EP 2 512 112 B1**
(45) Veröffentlichungstag und Bekanntmachung des Hinweises auf die Patenterteilung: **27.02.2019**
(21) Anmeldenummer: 12001494.9
(22) Anmeldetag: 06.03.2012
(51) Int. Cl.: H04M 11/02, H04M 3/42

(54) **Haus-Kommunikationssystem mit mindestens einer Türstation und mindestens einer Wohnungsstation**
Building communication system with at least one door station and at least one residence station
Système de communication interne doté d'au moins une station de porte et au moins une station d'habitation

(30) Priorität: 16.04.2011 DE 102011017366
(43) Veröffentlichungstag der Anmeldung: 17.10.2012
(73) Patentinhaber: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Schramm, Peter, 44269 Dortmund (DE)

(56) Entgegenhaltungen:
- GB-A- 2 285 530
- US-B1- 6 993 123
- US-B1- 7 783 018

## Beschreibung

Die Erfindung betrifft ein Haus-Kommunikationssystem mit mindestens einer Türstation und mindestens einer Wohnungsstation, wobei diese Stationen über einen Bus miteinander verbunden sind und jede Station eine Verarbeitungs-/Ansteuereinheit aufweist, wobei die Türstation mindestens einen Klingelknopf zur Erzeugung eines Klingel-Signals aufweist und mittels der Verarbeitungs-/Ansteuereinheit einer Wohnungsstation bei Empfang eines Klingel-Signals ein(e) Türklingel/Tonerzeuger ansteuerbar ist.

Bei allgemein bekannten Haus-Kommunikationssystemen erfolgt eine bidirektionale Kommunikation zwischen Türstation(en) und Wohnungsstation(en). Eine Benachrichtigung von Besuchern - beispielsweise eines gewerblichen Objektes - über Öffnungszeiten, erienzeiten usw. erfolgt unter Zuhilfenahme separater Hinweisschilder, welche in unmittelbarer Nähe der Türstation aufgestellt werden. Dabei ist es von Nachteil, dass es für den Bewohner sehr aufwändig ist, den Text eines Hinweisschildes kurzfristig zu ändern. Weiterhin ist es von Nachteil, dass ein Besucher keine erläuternde Rückmeldung erhält, warum der durch Betätigung des Klingelknopfes ausgelöste Ruf vom Bewohner nicht angenommen wird.

Aus der US 7783018 B1 ist ein Hauskommunikationssystem mit einer Wohnungsstation und einer Türstation bekannt.

In der GB 2285530 A ist Anrufbeantworter für eine Türklingel beschrieben.

Der Erfindung liegt die Aufgabe zugrunde, ein Haus-Kommunikationssystem mit mindestens einer Türstation und mindestens einer Wohnungsstation anzugeben, bei welchem bedarfsweise eine erläuternde Benachrichtigung eines Besuchers möglicht ist.

Diese Aufgabe wird erfindungsgemäß in Verbindung mit dem kennzeichenden Teils des Anspruchs 1 dadurch gelöst,
dass
- die Türstation-Information in Video-Form vorliegt und das Türstation-Informations-Signal (IT) dementsprechend ein Display der Türstation beaufschlagt, wobei
- die Wohnungsstation Bedien-/Eingabeelemente zur Eingabe der Türstation-Information in Video-Form aufweist, und
- eine Eingabe/Programmierung der unterschiedlichen Betriebsarten unter Zuhilfenahme der Bedien-/Eingabeelemente und der Verarbeitungs-/Ansteuereinheit erfolgt, und
- die Wohnungsstation eine Aktivierungstaste zur unmittelbaren Ansteuerung der Verarbeitungs-/Ansteuereinheit unter Umgehung des Zeitgliedes aufweist.

Die mit der Erfindung erzielbaren Vorteile liegen insbesondere darin, dass es für den Bewohner in sehr einfacher Weise möglich ist, eine Information für einen Besucher an der Türstation zur Verfügung zu stellen, wobei auch eine kurzfristige Änderung der Information möglich ist. Vorteilhaft erhält ein Besucher unmittelbar an der Türstation eine Rückmeldung darüber, warum ein Ruf vom Bewohner nicht angenommen werden konnte. Dabei können eine Reihe unterschiedlicher Türstation-Informationen in Audio- oder Video-Form vorab vorgegeben und abgespeichert und bei Eintritt eines vordefinierten Ereignisses oder auch unmittelbar zu einem gewünschten Zeitpunkt aktiviert, d. h. in der Türstation zur Kenntnis gebracht werden.

Dabei kann die Türstation-Information in Audio-Form vorliegen und das Türstation-Informations-Signal dementsprechend einen Lautsprecher der Türstation beaufschlagen. Alternativ hierzu oder in Ergänzung kann die Türstation-Information in Video-Form z. B. als Text vorliegen und das Türstation-Informations-Signal dementsprechend ein Display der Türstation beaufschlagen.

In Ausgestaltung der Erfindung kann die Wohnungsstation ein Mikrofon zur Aufnahme einer Türstation-Information in Audio-Form aufweisen. Alternativ hierzu oder in Ergänzung kann die Wohnungsstation ein Bedien-/Eingabeelement zur Eingabe einer Türstation-Information in Video-Form aufweisen. Als Bedien-/Eingabeelemente können Tasten für Zeicheneingabe und/oder ein USB-Anschluss und/oder ein Kartenlesegerät verwendet werden, wobei bei Letzterem eine Speicherkarte mit der gewünschten Türstation-Information eingeführt und ausgelesen wird.

Um jederzeit bei Drücken des Klingelknopfes eine Türstation-Information zur Kenntnis bringen (z. B. anzeigen) zu können, kann die Wohnungsstation eine Aktivierungstaste zur unmittelbaren Ansteuerung der Verarbeitungs-/Ansteuereinheit unter Umgehung des Zeitgliedes aufweisen.

Die Erfindung wird nachstehend an Hand der in der Zeichnung dargestellten Ausführungsbeispiele erläutert. Es zeigen:
- Fig. 1: ein Haus-Kommunikationssystem mit einer Türstation und zwei Wohnungsstationen,
- Fig. 2: eine Sicht auf die Frontseite einer Türstation,
- Fig. 3: eine Wohnungsstation mit erweiterter Funktionalität.

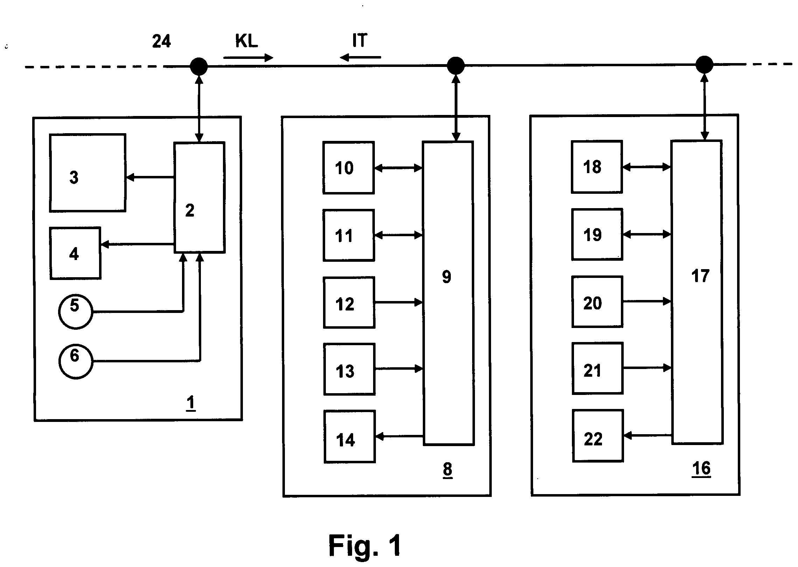

In Fig. 1 ist ein Haus-Kommunikationssystem mit einer Türstation und zwei Wohnungsstationen dargestellt. An einen Bus 24, insbesondere einen Zweidraht-Bus, sind eine Türstation 1 und zwei Wohnungsstationen 8, 16 angeschlossen. Selbstverständlich können auch mehr als zwei Wohnungsstationen oder auch nur eine einzige Wohnungsstation vorgesehen sein.

Die Türstation 1 weist unter Anderem eine Verarbeitungs-/Ansteuereinheit 2, ein Display 3, einen Lautsprecher 4 und zwei Klingelknöpfe 5 und 6 auf, wobei die Klingelknöpfe 5 und 6 die Verarbeitungs-/Ansteuereinheit 2 bei Betätigung mit entsprechenden Signalen beaufschlagen und die Verarbeitungs-/Ansteuereinheit 2 das Display 3 oder den Lautsprecher 4 gegebenenfalls mit Signalen beaufschlagt. Bei Betätigung eines Klingelknopfes 5 oder 6 wird insbesondere ein Klingel-Signal KL an den Bus 24 gesendet. Es ist generell ein bidirektionaler Signalaustausch der Verarbeitungs-/Ansteuereinheit 2 mit dem Bus 24 möglich.

Die Wohnungsstation 8 weist unter Anderem eine Verarbeitungs-/Ansteuereinheit 9, einen Speicher 10, ein Zeitglied 11, ein Mikrofon 12, ein Bedien-/Eingabeelement 13 und eine(n) Türklingel/Tonerzeuger 14 auf, wobei ein bidirektionaler Signalaustausch zwischen Verarbeitungs-/Ansteuereinheit 9 und Speicher 10 sowie zwischen Verarbeitungs-/Ansteuereinheit 9 und Zeitglied 11 möglich ist. Die Verarbeitungs-/Ansteuereinheit 9 wird gegebenenfalls mit Signalen des Mikrofons 12 oder des Bedien-/Eingabeelement 13 beaufschlagt. Bei Empfang eines Klingel-Signals KL beaufschlagt die Verarbeitungs-/Ansteuereinheit 9 bedarfsweise die/den Türklingel/Tonerzeuger 14.

Die Wohnungsstation 16 weist unter Anderem eine Verarbeitungs-/Ansteuereinheit 17, einen Speicher 18, ein Zeitglied 19, ein Mikrofon 20, ein Bedien-/Eingabeelement 21 und eine(n) Türklingel/Tonerzeuger 22 auf, wobei ein bidirektionaler Signalaustausch zwischen Verarbeitungs-/Ansteuereinheit 17 und Speicher 18 sowie zwischen Verarbeitungs-/Ansteuereinheit 17 und Zeitglied 19 möglich ist. Die Verarbeitungs-/Ansteuereinheit 17 wird gegebenenfalls mit Signalen des Mikrofons 20 oder des Bedien-/Eingabeelement 21 beaufschlagt. Bei Empfang eines Klingel-Signals KL beaufschlagt die Verarbeitungs-/Ansteuereinheit 17 bedarfsweise die/den Türklingel/Tonerzeuger 22.

Für die nachfolgenden Betrachtungen wird angenommen, dass der Klingelknopf 5 der Türstation 1 speziell der Wohnungsstation 8 zugeordnet ist und dass der Klingelknopf 6 speziell der Wohnungsstation 16 zugeordnet ist.

Mittels der Zeitglieder 11, 19 können unterschiedliche Betriebarten der betreffenden Wohnungsstation 8, 16 über Zeitangaben und/oder das Datum respektive den aktuellen Wochentag gesteuert vorgegeben werden, z. B.
- eine Betriebsart A gültig für den Zeitraum Montag bis Freitag jeweils von 8:00 bis 18:00 Uhr,
- eine Betriebsart B gültig für den Zeitraum Montag bis Freitag jeweils von 0:00 bis 8:00 Uhr,
- eine Betriebart C gültig für den Zeitraum Montag bis Freitag jeweils von 18:00 bis 24:00 Uhr,
- eine Betriebsart D gültig für den Zeitraum Samstag von 0:00 Uhr bis Sonntag 24:00 Uhr.

Die Eingabe / Programmierung dieser unterschiedlichen Betriebsarten erfolgt unter Zuhilfenahme der Bedien-/Eingabeelemente 13, 21 und der Verarbeitungs-/Ansteuereinheit 9, 17. Als Bedien-/Eingabeelemente 13, 21 können beispielsweise Tasten für Zeicheneingabe und/oder ein USB-Anschluss und/oder ein Kartenlesegerät und eine zugeordnete eingeführte Speicherkarte (mit den darauf gespeicherten Werten betreffend Zeitangaben, Datum usw.) verwendet werden.

Mittels der Mikrofone 12, 20 können gewünschte Audio-Informationen als Türstation-Informationen aufgenommen und unter Einsatz der Verarbeitungs-/Ansteuereinheiten 9, 17 in den Speichern 10, 18 abgespeichert werden. Ein Beispiel für eine derartige Audio-Information als Türstation-Information ist der gesprochene Wortlaut "Unsere Praxiszeiten sind am Montag, Mittwoch und Freitag von 8 bis 13 Uhr sowie am Dienstag und Donnerstag von 14 bis 18 Uhr".

Mittels der Bedien-/Eingabeelemente 13, 21 können gewünschte Video-Informationen als Türstation-Informationen eingegeben und unter Einsatz der Verarbeitungs-/Ansteuereinheiten 9, 17 in den Speichern 10, 18 abgespeichert werden. Ein Beispiel für eine derartige Video-Information als Türstation-Information wäre der anzuzeigende Text "Unsere Öffnungszeiten sind: Mo. - Fr. 8:00 - 18:00".

Für das zweite Beispiel und eine dementsprechende Programmierung der Wohnungsstation 8 ergibt sich z. B. folgende Funktionsweise des Haus-Kommunikationssystems:
- Betätigt ein Besucher innerhalb der Zeiträume Montag bis Freitag, jeweils 8:00 bis 18:00 Uhr, d. h. innerhalb der Betriebsart A, den Klingelknopf 5, so empfängt die betroffene Wohnungsstation über den Bus 24 ein Klingel-Signal KL und dementsprechend wird über die Verarbeitungs-/Ansteuereinheit 9 die/der Türklingel/Tonerzeuger 14 beaufschlagt.
- Betätigt ein Besucher innerhalb der Zeiträume Montag, 18:00 Uhr bis Dienstag, 8:00 Uhr oder Dienstag, 18:00 Uhr bis Mittwoch, 8:00 Uhr oder Mittwoch, 18:00 Uhr bis Donnerstag, 8:00 Uhr oder Donnerstag, 18:00 Uhr bis Freitag, 8:00 Uhr oder Freitag, 18:00 Uhr bis Montag, 8:00 Uhr den Klingelknopf 5, d. h. innerhalb der Betriebsarten B, C, D, so empfängt die betroffene Wohnungsstation über den Bus 24 ein Klingel-Signal KL. Daraufhin wird über die Verarbeitungs-/Ansteuereinheit 9 die im Speicher 10 abgespeicherte Türstation-Information in Form eines Türstation-Informations-Signals IT über die Verarbeitungs-/Ansteuereinheit 9, den Bus 24 und die Verarbeitungs-/Ansteuereinheit 2 dem Display 3 der Türstation 1 zugeleitet, worauf im Display 3 die Anzeige "Unsere Öffnungszeiten sind: Mo. - Fr. 8:00 - 18:00" zur Kenntnis gebracht wird.

Die Programmierung der weiteren Wohnungsstation 16 kann unabhängig von dieser erläuterten Programmierung der Wohnungsstation 8 in gewünschter Weise erfolgen.

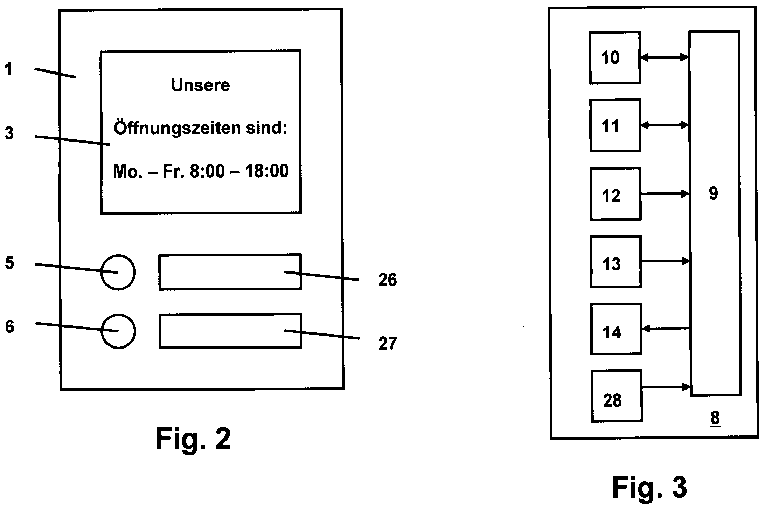

In Fig. 2 ist eine Sicht auf die Frontseite einer Türstation dargestellt, wobei in Übereinstimmung mit dem vorstehend erläuterten zweiten Beispiel das Display 3 der Türstation 1 mit der Anzeige "Unsere Öffnungszeiten sind: Mo. - Fr. 8:00 - 18:00" beaufschlagt ist.

In Fig. 3 ist eine Wohnungsstation mit erweiterter Funktionalität dargestellt. Es ist die Wohnungsstation 8 gezeigt, welche zusätzlich eine Aktivierungstaste 28 aufweist, mit der die Verarbeitungs-/Ansteuereinheit 9 bedarfsweise beaufschlagt werden kann, um derart unter Umgehung der im Zeitglied 11 abgespeicherten Betriebsarten unmittelbar und quasi per Tastendruck eine im Speicher 18 abgespeicherte Türstation-Information - eine Audio-Information oder eine Video-Information - mittels eines über den Bus 24 übertragenen Türstation-Informations-Signals IT sofort (respektive bei Betätigung des Klingelknopfes) bei der Türstation 1 zur Kenntnis zu bringen. Ein Beispiel für eine derartige Information ist die im Display 3 erscheinende Anzeige "Bin innerhalb der nächsten 30 Minuten zurück".

### Bezugszeichenliste

- 1: Türstation
- 2: Verarbeitungs-/Ansteuereinheit
- 3: Display
- 4: Lautsprecher
- 5: Klingelknopf
- 6: Klingelknopf
- 7: -
- 8: Wohnungsstation
- 9: Verarbeitungs-/Ansteuereinheit
- 10: Speicher
- 11: Zeitglied
- 12: Mikrofon
- 13: Bedien-/Eingabeelement
- 14: Türklingel/Tonerzeuger
- 15: -
- 16: Wohnungsstation
- 17: Verarbeitungs-/Ansteuereinheit
- 18: Speicher
- 19: Zeitglied
- 20: Mikrofon
- 21: Bedien-/Eingabeelement
- 22: Türklingel/Tonerzeuger
- 23: -
- 24: Bus
- 25: -
- 26: Namensschild
- 27: Namensschild
- 28: Aktivierungstaste

- KL: Klingel-Signal
- IT: Türstation-Informations-Signal

## Patentansprüche

1. Haus-Kommunikationssystem mit mindestens einer Türstation (1) und mindestens einer Wohnungsstation (8, 16), wobei diese Stationen (1, 8, 16) über einen Bus (24) miteinander verbunden sind und jede Station (1, 8, 16) eine Verarbeitungs-/Ansteuereinheit (2, 9, 17) aufweist, wobei die Türstation (1) mindestens einen Klingelknopf (5, 6) zur Erzeugung eines Klingel-Signals (KL) aufweist und mittels der Verarbeitungs-/Ansteuereinheit (9, 17) einer Wohnungsstation (8, 16) bei Empfang eines Klingel-Signals (KL) ein(e) Türklingel/Tonerzeuger (14, 22) ansteuerbar ist, wobei
• an die Verarbeitungs-/Ansteuereinheit (9, 17) der mindestens einen Wohnungsstation (8, 16) ein Speicher (10, 18) und ein Zeitglied (11, 19) angeschlossen sind,
• mittels des Zeitgliedes (11, 19) unterschiedliche Betriebsarten über Zeitangaben und/oder das Datum respektive den aktuellen Wochentag gesteuert vorgebbar und über die Verarbeitungs-/Ansteuereinheit (9, 17) umsetzbar sind, wobei durch diese unterschiedlichen Betriebsarten festgelegt ist, wann ein empfangenes Klingel-Signal (KL) an die/den Türklingel/Tonerzeuger (14, 22) durchzuschalten ist und wann nicht,
• mittels des Speichers (10, 18) mindestens eine an der Türstation (1) zur Kenntnis zu bringende Türstation-Information abspeicherbar ist, und
• bei Empfang eines Klingel-Signals (KL) während des Auftretens einer Betriebsart mit nicht durchzuschaltendem Klingelsignal (KL) die Verarbeitungs-/Ansteuereinheit (9, 17) der Wohnungsstation mittels eines Türstation-Informations-Signals (IT) eine abgespeicherte Türstation-Information an die Türstation (1) weiterleitet.
**dadurch gekennzeichnet, dass**
• die Türstation-Information in Video-Form vorliegt und das Türstation-Informations-Signal (IT) dementsprechend ein Display (3) der Türstation (1) beaufschlagt, wobei
• die Wohnungsstation (8, 16) Bedien-/Eingabeelemente (13, 21) zur Eingabe der Türstation-Information in Video-Form aufweist, und
• eine Eingabe / Programmierung der unterschiedlichen Betriebsarten unter Zuhilfenahme der Bedien-/Eingabeelemente (13, 21) und der Verarbeitungs-/Ansteuereinheit (9, 17) erfolgt, und
• die Wohnungsstation (8, 16) eine Aktivierungstaste (28) zur unmittelbaren Ansteuerung der Verarbeitungs-/Ansteuereinheit (9, 17) unter Umgehung des Zeitgliedes (11, 19) aufweist.

2. Haus-Kommunikationssystem nach Anspruch 1, **dadurch gekennzeichnet, dass** die Türstation-Information in Audio-Form vorliegt und das Türstation-Informations-Signal (IT) dementsprechend einen Lautsprecher (4) der Türstation (1) beaufschlagt.

3. Haus-Kommunikationssystem nach Anspruch 2, **dadurch gekennzeichnet, dass** die Wohnungsstation (8, 16) ein Mikrofon (12, 20) zur Aufnahme einer Türstation-Information in Audio-Form aufweist.

## Claims

1. Building communication system having at least one door station (1) and at least one apartment station (8, 16), with these stations (1, 8, 16) being connected to one another via a bus (24) and with each station (1, 8, 16) having a processing/control unit (2, 9, 17), with the door station (1) having at least one bell button (5, 6) for production of a bell signal (KL), and with a doorbell/tone generator (14, 22) being controllable by means of the processing/control unit (9, 17) of an apartment station (8, 16) when a bell signal (KL) is received, wherein
• a memory (10, 18) and a timer (11, 19) are connected to the processing/control unit (9, 17) of the at least one apartment station (8, 16),
• different operating modes can be predetermined in a controlled manner by means of the timer (11, 19) by means of time details and/or data relating to the current day of the week, and can be implemented via the processing/control unit (9, 17), with these different operating modes defining when a received bell signal (KL) should be passed on to the doorbell/tone generator (14, 22) and when it should not,
• at least one door station information item, which can be notified at the door station (1), can be stored by means of the memory (10, 18), and,
• when a bell signal (KL) is received during the appearance of an operating mode with a bell signal (KL) which should not be passed on, the processing/control unit (9, 17) of the apartment station passes on a stored door station information item to the door station (1) by means of a door station information signal (IT),
**characterized in that**
• the door station information is in video form, and the door station information signal (IT) is applied appropriately to a display (3) at the door station (1), wherein
• the apartment station (8, 16) has control/input elements (13, 21) for inputting the door station information in video form, and
• the different operating modes are input/programmed with the aid of the control/input elements (13, 21) and the processing/control unit (9, 17)
• the apartment station (8, 16) has an activation key (28) for direct control of the processing/control unit (9, 17), bypassing the timer (11, 19).

2. Building communication system according to Claim 1, **characterized in that** the door station information is in audio form and the door station information signal (IT) is appropriately applied to a loudspeaker (4) at the door station (1).

3. Building communication system according to Claim 2, **characterized in that** the apartment station (8, 16) has a microphone (12, 20) for recording door station information in audio form.

## Revendications

1. Système de communication domestique comprenant au moins une station de porte (1) et au moins une station d'habitation (8, 16), dans lequel lesdites stations (1, 8, 16) sont reliées entre elles par l'intermédiaire d'un bus (24) et chaque station (1, 8, 16) comporte une unité de traitement/commande (2, 9, 17), dans lequel la station de porte (1) comporte au moins un bouton de sonnette (5, 6) destiné à générer un signal de sonnette (KL) et une sonnette de porte/un générateur tonalité (14, 22) pouvant être commandé par l'unité de traitement/commande (9, 17) d'une station d'habitation (8, 16) lors de la réception d'un signal de sonnette (KL), **caractérisé en ce que**
- une mémoire (10, 18) et une minuterie (11, 19) sont raccordées à l'unité de traitement/commande (9, 17) de ladite au moins une station d'habitation (8, 16),
- la minuterie (11, 19) permet de prédéfinir de manière commandée différents modes de fonctionnement par l'intermédiaire de données de temps et/ou de la date ou du jour de la semaine en cours et de les activer par l'intermédiaire de l'unité de traitement/commande (9, 17), dans lequel ces différents modes de fonctionnement permettent de spécifier les instants où un signal de sonnette (KL) doit être transmis à la sonnette de porte/au générateur de tonalité (14, 22) et où il ne l'est pas,
- la mémoire (10, 18) permet de mémoriser au moins une information de station de porte devant être portée à la connaissance de la station de porte (1), et
- lorsqu'un signal de sonnette (KL) est reçu lors de l'apparition d'un mode de fonctionnement dans lequel un signal de sonnette (KL) ne doit pas être activé, l'unité de traitement/commande (9, 17) de la station d'habitation transmet à la station de porte (1) au moyen d'un signal d'information (IT) l'information de station de porte mémorisée,
**caractérisé en ce que**
- l'information de station de porte se présente sous forme vidéo et le signal d'information de station de porte (IT) est appliqué de manière correspondante à un afficheur (3) de la station de porte (1), dans lequel
- la station d'habitation (8, 16) comporte des éléments de commande/d'entrée (13, 21) permettant de fournir en entrée l'information de station de porte sous forme vidéo, et
- les différents modes de fonctionnement sont fournis en entrée/programmés à l'aide des éléments de commande/d'entrée (13, 21) et de l'unité de traitement/commande (9, 17), et
- la station d'habitation (8, 16) comporte un bouton d'activation (28) permettant de commander directement l'unité de traitement/commande (9, 17) tout en contournant la minuterie (11, 19).

2. Système de communication domestique selon la revendication 1, **caractérisé en ce que** l'information de station de porte se présente sous forme audio et **en ce que** le signal d'information de station de porte (IT) est appliqué de manière correspondante à un haut-parleur (4) de la station de porte (1).

3. Système de communication domestique selon la revendication 2, **caractérisé en ce que** la station d'habitation (8, 16) comporte un microphone (12, 20) permettant d'acquérir une information de station de porte sous forme audio.
